## Europäisches Patentamt
## European Patent Office
## Office européen des brevets

(19)

(11) Veröffentlichungsnummer: **0 229 941**
**B1**

(12)

# EUROPÄISCHE PATENTSCHRIFT

(45) Veröffentlichungstag der Patentschrift:
**11.10.89**

(51) Int. Cl.⁴: **B25J 17/02, B25J 18/06**

(21) Anmeldenummer: **86116616.3**

(22) Anmeldetag: **29.11.86**

(54) **Getriebekopf für Manipulatoren.**

(30) Priorität: **19.12.85 DE 3545068**

(43) Veröffentlichungstag der Anmeldung:
**29.07.87 Patentblatt 87/31**

(45) Bekanntmachung des Hinweises auf die Patenterteilung:
**11.10.89 Patentblatt 89/41**

(84) Benannte Vertragsstaaten:
**AT BE CH DE FR GB IT LI NL SE**

(56) Entgegenhaltungen:
**DE-A- 3 428 748**
**US-A- 4 431 366**

**VOLMER, "Industrieroboter", 2. Auflage, 1981 VEB Verlag Berlin**

(73) Patentinhaber: **KUKA Schweissanlagen & Roboter GmbH, Blücherstrasse 144, D-8900 Augsburg(DE)**

(72) Erfinder: **Zimmer, Ernst, Michael-Steinherr Strasse 34, D-8904 Friedberg(DE)**

(74) Vertreter: **Ernicke, Hans-Dieter, Dipl.-Ing. et al, Schwibbogenplatz 2b, D-8900 Augsburg(DE)**

## Beschreibung

Die Erfindung bezieht sich auf einen Getriebekopf für Manipulatoren mit drei hintereinander angeordneten und um zueinander schräge Achsen gelagerten Kopfteilen, deren schräge Achsen mit der Grundachse des Getriebekopfes in Streckstellung nach entgegengesetzten Seiten sich öffnende, spitze Winkel bilden, wobei an der Eingangsseite des hinteren Kopfteils die Antriebswellen für die Kopfteile und gegebenenfalls für einen im vorderen Kopfteil gelagerten Werkzeugträger konzentrisch zueinander angeordnet und hoch untersetzende Getriebe abtriebsseitig auf den längs der schrägen Achsen sich erstreckenden und über Winkelgetriebe miteinander verbundenen Wellen vorgesehen sind.

Eine solche Anordnung ist durch die DE-A 34 28 748 bekannt geworden. Mit dem Stand der Technik wird das Ziel verfolgt, einen Getriebekopf mit einem wesentlich vergrößerten Bewegungsspielraum bei kompakter Bauweise zu entwickeln. Zufolge der Lagerung der einzelnen Getriebekopfteile längs schräger Achsen ist die Möglichkeit gegeben, den vorderen Getriebekopfteil, der meistens einen Werkzeugträger aufnimmt, in eine Schwenklage zu bringen, bei der die Wirkrichtung des Werkzeugträgers sogar entgegengesetzt zur Richtung des den Getriebekopf tragenden Auslegers oder dergleichen verläuft.

Bei solchen vorbekannten Getriebeköpfen ist es konstruktiv denkbar, im hinteren Getriebekopfteil drei konzentrisch zueinander angeordnete Antriebswellen zu lagern. Wenn aber jeder Getriebekopfteil drehbar angetrieben werden soll und außerdem auch der Werkzeugträger in Rotation versetzt werden muß, dann ergibt sich die Konsequenz, die Drehbewegung von zwei dieser vier Teile über eine gemeinsame Antriebswelle herbeizuführen.

Bei einer vergleichbaren, vorbekannten Anordnung nach der DE-A 34 31 033 sind der hintere und der vordere Getriebekopfteil über einen Kegelradzahnkranz miteinander verbunden. Auf diese Weise wird der vordere Getriebekopfteil zufolge des Antriebes des mittleren Getriebekopfteiles am hinteren Getriebekopfteil abgewälzt. Beim Ausführungsbeispiel der Fig. (7) der eingangs genannten DE-A 3 428 748 sind die längs der schrägen Achsen sich erstreckenden Wellen über einen Kegelradsatz miteinander verbunden. Die erste schräge Welle treibt über ein hoch untersetzendes Getriebe den mittleren Getriebekopfteil und die zweite schräge Welle über ein anderes, hoch untersetzendes Getriebe den vorderen Getriebekopfteil an. Dieser Stand der Technik nach der DE-A 34 28 748 wird als der nächstliegende angesehen, weil er zufolge der Anordnung hochuntersetzender Getriebe am abtriebsseitigen Ende des einzelnen Getriebezuges dafür sorgt, daß Getriebespiel nicht Einfluß auf die Genauigkeit der gesteuerten Bewegung nimmt. Außerdem kann der vorbekannte Getriebekopf wesentlich schlanker als vergleichbare, andere bekannte Getriebeköpfe ausgebildet werden, weil zufolge der abtriebsseitigen Anordnung der hoch untersetzenden Getriebe die Antriebswellen hochtourig angetrieben und dementsprechend klein dimensioniert sind. Der Auslegerarm bzw. der hintere Getriebekopfteil, der maximal drei konzentrisch zueinander angeordnete Antriebswellen aufweist, kann demzufolge im Durchmesser verhältnismäßig schlank dimensioniert werden.

Die vorbekannte Anordnung nach Fig. (7) der DE-A 34 28 748 bringt aber Probleme hinsichtlich der rechnerischen Festlegung der Antriebssteuerungen mit sich. Dies hängt damit zusammen, daß sich die Untersetzungsgetriebe an Kopfteilen abstützen müssen, welche selbst für sich rotierende Bewegungen ausführen. Mithin müssen solche Relativ-Drehbewegungen rechnerisch erfaßt und bei der Steuerung der einzelnen Antriebsmotore berücksichtigt werden.

Der Erfindung liegt die Aufgabe zugrunde, den Getriebekopf nach Fig. (7) der DE-A 34 28 748 so weiterzubilden, daß die rechnerische Festlegung der Bewegung der Getriebekopfteile vereinfacht und außerdem der Antrieb für einen gegebenenfalls im vorderen Kopfteil gelagerten Werkzeugträger ermöglicht wird.

Ausgehend von den im Oberbegriff des Hauptanspruches aufgeführten Merkmalen besteht die Erfindung darin, daß sich die Untersetzung des Untersetzungsgetriebes zwischen dem hinteren Kopfteil und dem mittleren Kopfteil von der Untersetzung des anderen Untersetzungsgetriebes zwischen dem mittleren Kopfteil und dem vorderen Kopfteil um eine Umdrehung unterscheidet, wobei der die beiden schrägen Wellen verbindende Winkeltrieb so angeordnet ist, daß eine Kompensation dieses Untersetzungs-Unterschiedes durch gegenseitige Abwälzung der Winkeltriebräder während einer Umdrehung des mittleren Kopfteiles erfolgt.

Der Erfindung liegt die Erkenntnis zugrunde, daß man die Eigenbewegung des mittleren Kopfteiles kompensieren muß, wenn man die rechnerische Steuerung der Bewegung des vorderen Getriebekopfteiles vereinfachen will. Bei der Erfindung wird nämlich davon ausgegangen, daß der mittlere Kopfteil und der vordere Kopfteil durch den gleichen Antriebszug angetrieben werden, nämlich durch Wellen, die sich längs der schrägen Achsen erstrecken und untereinander über Winkelgetriebe verbunden sind. Diese Wellen sind außerdem abtriebsseitig mit den hochuntersetzenden Getrieben versehen, deren Wirkung darauf beruht, daß sich ein Getriebeteil abstützt, damit das andere Getriebeteil mit einer wesentlich geringeren Drehzahl angetrieben werden kann. Das dem vorderen Getriebekopfteil zugeordnete, hoch untersetzende Getriebe muß sich folgerichtig am mittleren Kopfteil abstützen. Dieses mittlere Kopfteil vollzieht aber zufolge des gemeinsamen Antriebes eine Eigenbewegung, die dazu führt, daß sich der vordere Getriebekopfteil in einer anderen Drehgeschwindigkeit als der mittlere Kopfteil dreht.

Wenn man aber den die schrägen Wellen verbindenden Winkeltrieb erfindungsgemäß anordnet, so daß die Eigenumdrehung des mittleren Getriebekopfteiles kompensiert wird, dann ergibt sich wieder eine gleichgroße Drehbewegung des mittleren und vorderen Getriebekopfteiles.

Ausführungsvarianten für diese Kompensation des Untersetzungsunterschiedes ergeben sich aus den Unteransprüchen 2 bis 5.

Danach werden vornehmlich Harmonic-Drive-Differentialgetriebe als Untersetzungsgetriebe verwendet, diese aber zur Erreichung der Untersetzungsdifferenz mit unterschiedlicher Abstützung ihrer Stahlringe (Dynamic Spline (DS) bzw. Circular Spine (CS)) eingebaut. Von diesen Getrieben weiß man, daß sich unterschiedliche Untersetzungen ergeben, je nachdem, ob der Dynamic Spline oder der Circular Spline zur Abstützung eingesetzt werden. Bei einem solchen Differentialgetriebe ist die Untersetzung vom Unterschied der Zähnezahlen dieser Dynamic Spline bzw. Circular Spline abhängig. Gewöhnlich erhält der Dynamic Spline eine gerade Zähnezahl und der Circular Spline eine um zwei Zähne vergrößerte Zähnezahl. Der außerdem bei solchen Getrieben eingesetzte, sogenannte Flex Spline, ein dünnwandiger Ring mit Außenverzahnung, besitzt die gleiche Zähnezahl wie der Dynaminc Spline. Schließlich weist ein solches Harmonic-Drive-Differentialgetriebe einen elliptischen Wave Generator auf. Dieser Wave Generator und der Flex Spline haben im Normalfall entgegengesetzte Drehrichtungen, und der Dynamic Spline wird als Abtrieb mit gleicher Drehrichtung wie der Flex Spline verwendet. Der Circular Spline wird festgelegt und stützt die Drehbewegung bzw. das Abtriebsmoment des Dynamic Spline ab. Die Funktionen des Circular Spline und des Dynamic Spline können jedoch auch umgekehrt werden. Bei festgelegtem Dynamic Spline ändert sich jedoch die Untersetzung, während der Circular-Spline als Abtrieb die gleiche Drehrichtung wie der Wave-Generator besitzt.

Wenn man z.B. von einer Zähnezahl von (200) für den Dynamic Spline und einer Zähnezahl von (202) für den Circular Spline ausgeht, ergeben sich folgende Untersetzungen:
Abtrieb durch Dynamic Spline (DS)
$i = n_{WG} / n_{DS} = Z_{DS} / (Z_{DS} - Z_{CS}) = 200 / -2 = -100$
Abtrieb durch den Circular Spline (CS)
$i = n_{WG} / n_{CS} = Z_{CS} / (Z_{CS} - Z_{DS}) = 202 / 2 = + 101$
Verschiedene Vorzeichen bedeuten entgegengesetzte Drehrichtungen des Abtriebes.

Setzt man demzufolge die Untersetzungsgetriebe je nach ihrer Abstützung richtig ein und wählt auch noch die Drehrichtung der einzelnen Wellen bzw. der anzutreibenden Kopfteile richtig, dann gelingt es ohne großen Aufwand, die Eigendrehung des mittleren Kopfteiles relativ zur Drehung des vorderen Kopfteiles zu kompensieren.

In den nachfolgenden Ausführungsbeispielen werden diese Zusammenhänge verdeutlicht.

Schließlich sieht die Erfindung vor, daß bei Anordnung eines angetriebenen Werkzeugträgers dessen Antriebswellenzug durch die sich längs der schrägen Achsen erstreckenden, hohlen Wellen geführt ist. Diese Maßnahme ist zwar an sich durch die DE-A 34 31 033 bekannt, wobei aber zu bemerken ist, daß diese Druckschrift keine im Getriebekopf angeordneten Untersetzungsgetriebe aufweist und daher bei gleicher Steifigkeit und Spielfreiheit wesentlich größer als der erfindungsgemäße Getriebekopf dimensioniert werden muß.

Einzelheiten der Erfindung ergeben sich aus der Zeichnung In ihr ist die Erfindung schematisch und beispielsweise dargestellt. Es zeigen:

Fig. (1) eine schematische Seitenansicht eines mehrteiligen Getriebekopfes,

Fig. (2) einen Vertikalschnitt durch den Getriebekopf gemäß Fig.(1) mit einer symbolischen Darstellung der Getriebezüge und

Fig. (3-8) vereinfachte Darstellungen der Getriebezüg im Bereiche des mittleren und vorderen Getriebekopfteiles in mehreren Ausführungsvarianten.

Im Ausführungsbeispiel der Fig. (1) ist in vereinfachter Darstellung ein Getriebekopf in Seitenansicht dargestellt, bei dem an einem Ausleger (8) oder einem entsprechenden Grundelement eines Manipulators der hintere Kopfteil (1) um die Grundachse (4) drehbar gelagert ist. Dieser hintere Kopfteil (1) führt ein mittleres Kopfteil (2), welches um die schräge Achse (5) drehbar am hinteren Kopfteil (1) gelagert ist. Der vordere Kopfteil (3) ist seinerseits um die schräge Achse (6) am mittleren Kopfteil (2) gelagert. Schließlich ist ein Werkzeugträger (7) dargestellt, der wahlweise ortsfest am vorderen Kopfteil (3) angeordnet oder auch drehbar an diesem vorderen Kopfteil (3) gelagert sein kann. Im Falle der drehbaren Lagerung des Werkzeugträgers (7) wird vorgezogen, seine Drehachse koaxial zur Grundachse (4) anzuordnen.

Die schrägen Achsen (5,6) sind so angeordnet, daß sie zur Grundachse (4) spitze Winkel ($\alpha$) bilden und zwar in der Gestalt, daß die Winkel ($\alpha$) sich nach entgegengesetzten Richtungen öffnen. Verdreht man die Kopfteile (2,3) um die schrägen Achsen (5,6) dann ergibt sich ein maximaler Bewegungsspielraum des Werkzeugträgers (7), dessen Wirkungsrichtung sogar entgegengesetzt zur Richtung des Auslegers (8) eingestellt werden kann. Es sei darauf hingewiesen, daß auch ungleich große spitze Winkel (z.B. $\alpha_1$ und $\alpha_2$) vorgesehen sein können.

Im Beispiel der Fig. (2) sind, ausgehend von der Anordnung gemäß Fig. (1), die Antriebszüge innerhalb des Gelenkkopfes symbolisch dargestellt. Man erkennt, daß im Ausleger (8) sowie an der Eingangsseite des hinteren Kopfteiles (1) konzentrisch zueinander angeordnete Antriebswellen (13,14,20) vorgesehen sind.

Die äußere Hohlwelle (13) der konzentrischen Wellen wird über ein Stirnradpaar (10,11) von einer außermittigen Antriebswelle (9) angetrieben. Diese Hohlwelle (13) treibt über ein hoch untersetzendes Getriebe (12) den hinteren Kopfteil (1) an, der am Ausleger (8) drehbar gelagert ist.

Eine innenliegende Hohlwelle (14) treibt über das Kegelradpaar (15), die schräge Welle (16), das Kegelradpaar (18), die schräge Welle (17) und das Kegelradpaar (19) eine Antriebswelle (32) an, mit welcher der Werkzeugträger (7) verbunden ist.

Die innenliegende Antriebswelle (20) treibt über das Kegelradpaar (21), die schräge Hohlwelle (22) und das Kegelradpaar (23) die schräge Hohlwelle (24) an.

Beide Hohlwellen (22,24) sind im mittleren Kopfteil (2) drehbar gelagert und mit hoch untersetzenden Getrieben (25,26) verbunden. Das Untersetzungsgetriebe (25) stützt sich am hinteren Kopfteil (1) ab und treibt beispielsweise im Untersetzungsverhältnis (x) den mittleren Kopfteil (2) an. Das Untersetzungsgetriebe (26) stützt sich am mittleren Kopfteil (2) ab und treibt im gleichen Beispiel in der Untersetzung (x-1) den vorderen Kopfteil (3) an. Außerdem ist bei diesem Beispiel wichtig, daß die Drehrichtung (29) des vorderen Kopfteiles (3) umgekehrt zur Drehrichtung (30) der diesen vorderen Kopfteil (3) antreibenden schrägen Hohlwelle verläuft.

Diese Differenzierung der Untersetzungsverhältnisse beider Untersetzungsgetriebe (25 und 26) sowie die richtige Wahl der Drehrichtung der einzelnen Wellen und Kopfteile führt dazu, daß die Kopfteile (2,3) gleichgroße Drehbewegungen ausführen, obwohl sie von einer gemeinsamen Antriebswelle angetrieben werden und zueinander Relativbewegungen ausführen.

Im Ausführungsbeispiel der Fig. (3) wird davon ausgegangen, daß der Werkzeugträger (7) angetrieben werden soll (vgl. Fig. (1) und (2)). Infolge dessen sind innenliegende, schräge Wellen (16,17) durch das Kegelradpaar (18) miteinander verbunden.

Es wird davon ausgegangen, daß beim Untersetzungsgetriebe (25) der Dynamic Spline am hinteren Kopfteil (1) abgestützt wird. Folglich treibt der Circular Spline ab und zwar in einer Untersetzung (101:1), wenn man von einer Zähnezahl (200) beim Dynamic Spline und einer Zähnezahl von (202) beim Circular Spline ausgeht.

Die schrägen Hohlwellen (22,24) sind durch das Kegelradpaar (23) in einer Anordnung miteinander verbunden, daß sie gleichsinnig umlaufen. Der im Bereiche dieser Hohlwellen (22,24) angedeutete Pfeil mag eine Uhrzeiger-Drehrichtung andeuten.

Das andere Untersetzungsgetriebe (26), welches an sich die gleiche Beschaffenheit wie das Untersetzungsgetriebe (25) aufweist, ist umgekehrt angeordnet, indem der Circular Spline am mittleren Kopfteil (2) festgelegt wird und der Dynamic Spline abtreibt. Dabei ergibt sich eine Untersetzung von (100:1), ausgehend von der oben angegebenen Zähnezahl, jedoch mit dem Unterschied, daß der angetriebene, vordere Kopfteil (3) gegensinnig zur Drehrichtung der Hohlwelle (24) umläuft.

Es ergibt sich also die Konsequenz, daß die Hohlwellen (22,24) sowie der mittlere Kopfteil (2) in der einen Richtung und der vordere Kopfteil (3) in der anderen Richtung rotieren. Die Kompensation der unterschiedlichen Untersetzungsverhältnisse ergibt sich dadurch, daß sich bei der Relativbewegung der Kopfteile (2,3) deren Kegelräder (23) aneinander korrigierend abwälzen. Man kann sich dies so verdeutlichen: Hält man die Hohlwelle (22) fest und verdreht den mittleren Kopfteil (2) um die schräge Achse (5), dann erfolgt dadurch eine Umdrehung der schrägen Hohlwelle (24) zufolge der Abwälzung am feststehenden Kegelrad des Kegelradpaares (23). Diese zusätzliche Umdrehung der Hohlwelle (24) führt dazu, daß die Kopfteile (2,3) tatsächlich die gleichgroßen Drehbewegungen, wenngleich auch im umgekehrten Drehsinn, ausführen.

Beim Ausführungsbeispiel der Fig. (4) ist beabsichtigt, einen gleichen Drehsinn zwischen den Kopfteilen (2 und 3) herbeizuführen. Bei einer mit Fig. (3) vergleichbaren Ausführung wird das Untersetzungsgetriebe (25) über den Dynamic Spline am hinteren Kopfteil (1) abgestützt, was zu einer Untersetzung (101:1) mit der Folge führt, daß die Drehrichtungen der Hohlwelle (22) und des mittleren Kopfteiles (2) gleichsinnig sind. Zwischen dem mittleren Kopfteil (2) und vorderen Kopfteil (3) befindet sich, entsprechend der Fig. (3), das Untersetzungsgetriebe (26), bei dem der Circular Spline am mittleren Kopfteil (2) abgestützt ist. Daraus folgt eine Untersetzung (100:1) in umgekehrter Drehrichtung von Hohlwelle (24) und vorderem Kopfteil (3). Um aber dennoch einen gleichen Drehsinn der beiden Kopfteile (2,3) herbeizuführen, sieht Fig. (4) die Anordnung eines Zwischenrades (27) vor, welches die Kegelräder des Kegelradpaares (23) voneinander distanziert und in einem Lager (28) des mittleren Kopfteiles (2) geführt ist. Auch in diesem Falle erfolgt eine Kompensation der Drehbewegung des mittleren Kopfteiles (2), so daß gleichgroße Drehbewegungen der Kopfteile (2,3) im gleichen Drehsinn die Folge sind.

Bei den Ausführungsbeispielen der Fig. (5) bis (8) wird davon ausgegangen, daß der Werkzeugträger (7) am vorderen Kopfteil (3) nicht drehbar angetrieben sein muß. Daraus folgt, daß die Anordnung des Winkeltriebes (23) auch anders gerichtet sein kann als im Falle der Fig (3) und (4).

Wie die Pfeile an den Wellen (22,24) der Fig. (5) zeigen, rotieren diese durch die Anordnung des Kegelradpaares (23) somit gegenläufig.

Beim Ausführungsbeispiel der Fig. (5) ist ein gleicher Drehsinn der Kopfteile (2,3) gewollt. Dies erreicht man dadurch, daß beim Untersetzungsgetriebe (25) der Dynamic Spline ortsfest am hinteren Kopfteil (1) abgestützt ist, was zur Folge hat, daß der mittlere Kopfteil (2) im gleichen Drehsinn zur Drehrichtung der Welle (22) mit einem Untersetzungsverhältnis von (101:1) angetrieben wird. Die Welle (24) rotiert umgekehrt zur Welle (22). Da aber beim Untersetzungsgetriebe (26) der Circular Spline ortsfest am mittleren Kopfteil (2) abgestützt wird, ergibt sich eine Drehrichtungsumkehr im Untersetzungsverhältnis (100:1) mit der Folge, daß die Kopfteile (2,3) gleichsinnig rotieren und die Eigenbewegung des mittleren Kopfteiles (2) kompensiert wird.

Das Ausführungsbeispiel der Fig. (6) hat zum Ziel, die Kopfteile (2,3) gegensinnig rotieren zu lassen, wobei aber bei beiden Untersetzungsgetrieben (25,26) die Dynamic Splines ortsfest abgestützt sein sollen. Um in diesem Falle eine gleichgroße Drehung der Kopfteile (2,3) herbeizuführen, wird die Untersetzung in einem der beiden Harmonic-Drive-Getriebe geringfügig geändert. Der Circular Spline des Untersetzungsgetriebes (25) erhält im angeführten Beispiel (204) Zähne, wohingegen der Dynamic Spline nur (202) Zähne aufweist. Daraus ergibt sich eine Untersetzung:

$$i = Z_{CS} / (Z_{CS} - Z_{DS}) = 204 / (204 - 202) = 102$$

Daraus ist also ersichtlich, daß das Untersetzungsgetriebe (25) wiederum eine um eine Umdrehung erhöhte Untersetzung gegenüber derjenigen des Untersetzungsgetriebes (26) besitzt. Bei diesem Untersetzungsgetriebe (26) ist der Dynamic Spline am mittleren Kopfteil festgelegt, was zu einer Untersetzung (101:1) führt bei gleicher Drehrichtung von Welle (24) und vorderem Kopfteil (3).

Beim Ausführungsbeispiel der Fig. (7) soll der gleiche Zweck wie im Falle der Fig. (6) erreicht werden, indem die Kopfteile (2,3) gegensinnig rotieren sollen. Anders als in Fig. (6) wird das Untersetzungsgetriebe (25) in normaler Ausführung wie bei Fig. (3) eingesetzt, mit der Folge, daß der mittlere Kopfteil (2) gleichsinnig zur Welle (22) bei einer Untersetzung (101:1) rotiert. Zwischen den Kegelrädern des Kegelradpaares (23) ist in diesem Falle wiederum ein Zwischenrad (27) angeordnet. Das Untersetzungsgetriebe (26) ist so angeordnet, daß der Circular Spline ortsfest im mittleren Kopfteil (2) gehalten wird. Daraus ergibt sich eine Untersetzung (100:1) mit umgekehrter Drehrichtung von Welle (24) und vorderem Kopfteil (3). Die Kompensation erfolgt - trotz gegenläufigem Drehsinns - durch das Zwischenrad (27).

Im Falle der Fig. (8) wird ein gleicher Drehsinn der Kopfteile (2,3) angestrebt. Hierbei ist das Untersetzungsgetriebe (25) wieder im Sinne des Beispiels der Fig. (6) mit erhöhter Zähnezahl ((204) Zähne Circular Spline, (202) Zähne Dynamic Spline) ausgestattet. Beim Untersetzungsgetriebe (26) ist ebenfalls der Dynamic Spline am mittleren Kopfteil (2) ortsfest festgelegt. Die Kompensation erfolgt wiederum durch das Zwischenrad (27), wobei auch in diesem Falle festzustellen ist, daß die Drehrichtung der Welle (24) und des vorderen Kopfteiles (3) gleichsinnig sind.

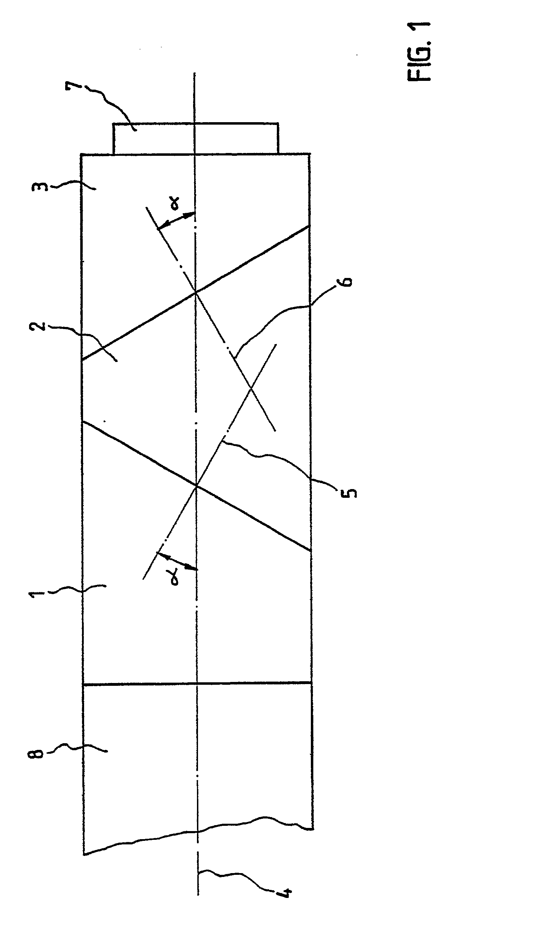

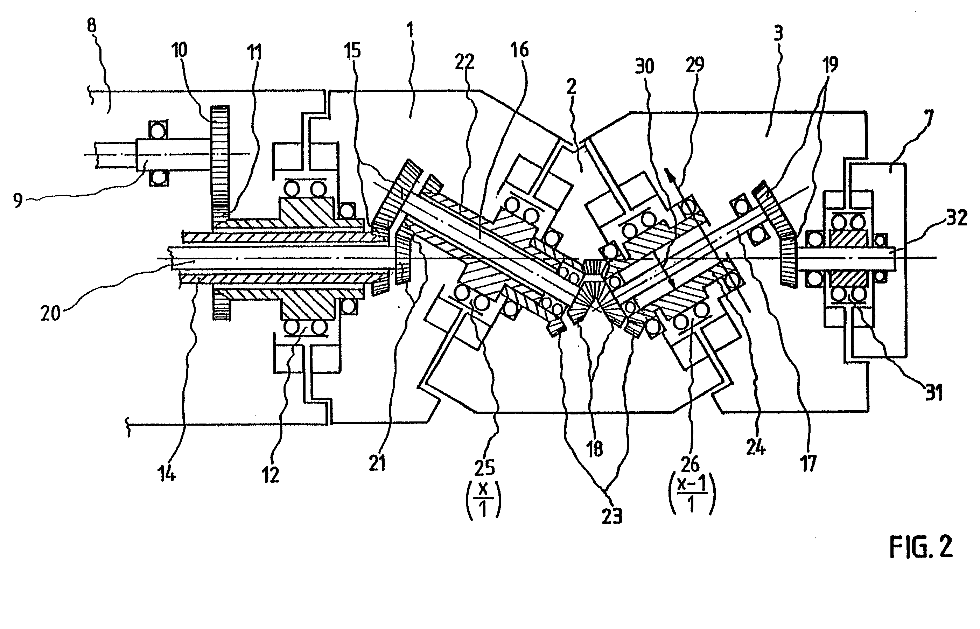

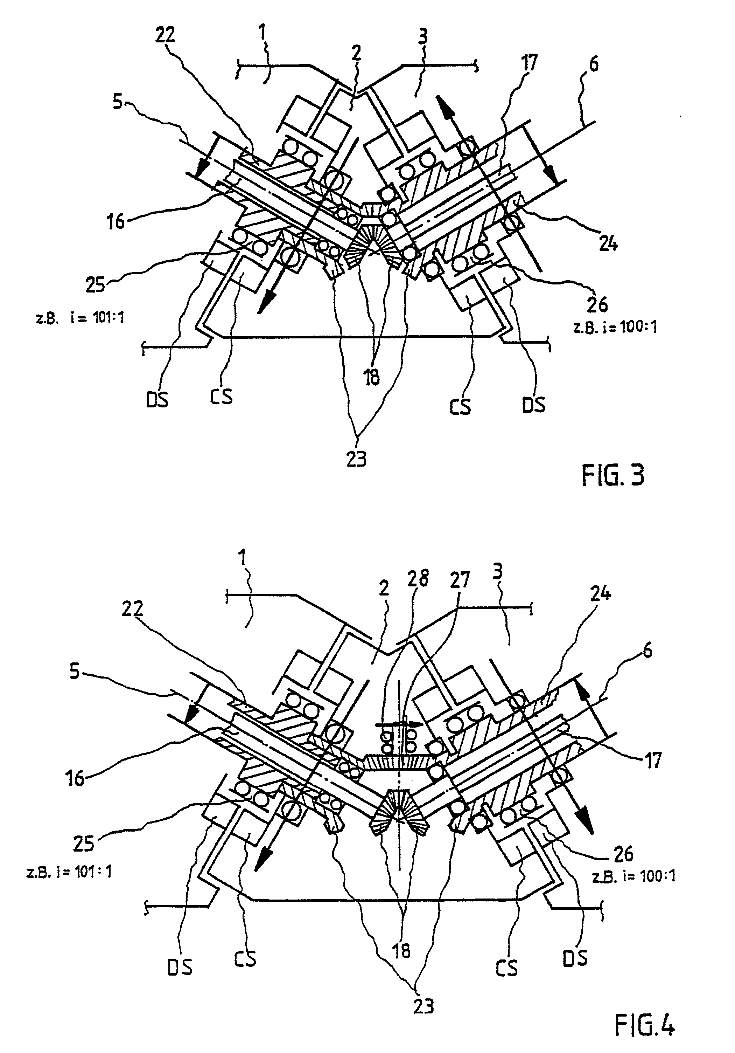

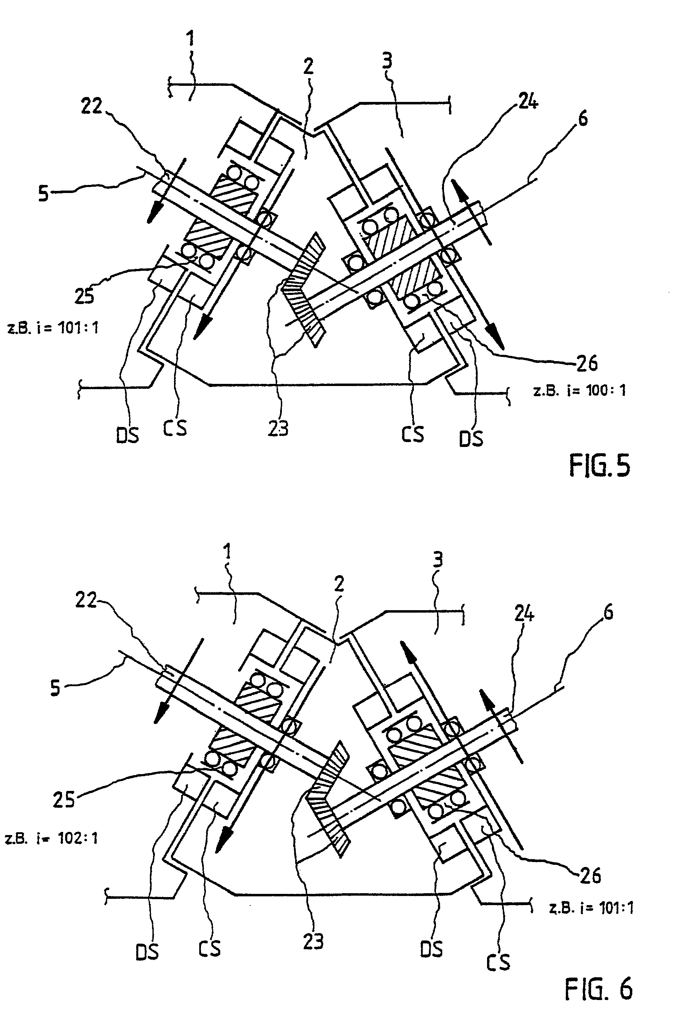

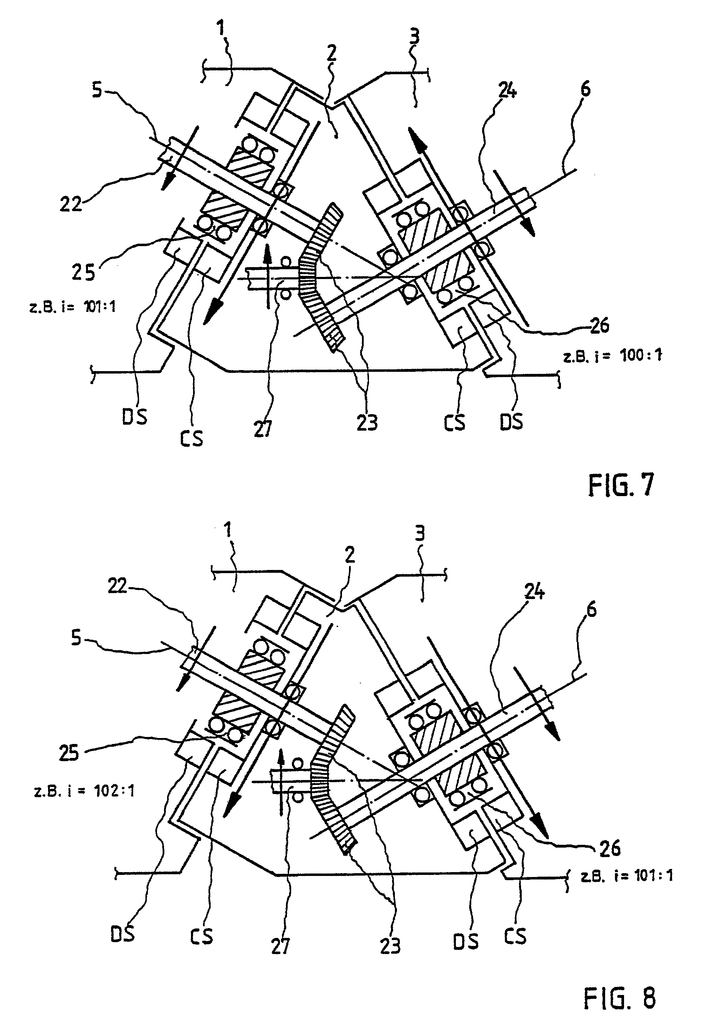

Die Wirkungsweise aller Ausführungsbeispiele der Fig. 2 bis 8 bleibt erhalten, wenn der Dynamic-Spline (DS) und der Circular-Spline (CS) jedes Untersetzungsgetriebes (25,26) gegeneinander getauscht werden, womit das Untersetzungsgetriebe (25) die Untersetzung (x-1) und das Untersetzungsgetriebe (x) erhält. Dann rotieren die Kopfteile (2,3) entgegengesetzt zu den in Fig. 2 bis 8 angegebenen Drehrichtungen.

Anstelle der sogenannten Harmonic-Drive-Differentialgetriebe können durchaus auch gleich- oder ähnlichwirkende Untersetzungsgetriebe, z.B. Planeten-Getriebe, erfindungsgemäß eingesetzt werden.

Stückliste

1 hinterer Kopfteil
2 mittlerer Kopfteil Getriebekopf
3 vorderer Kopfteil
4 Grundachse
5 schräge Achse
6 schräge Achse
7 Werkzeugträger
8 Ausleger
9 Antriebswelle für hinteren Kopfteil
10 Stirnrad
11 Stirnrad

12 Untersetzungsgetriebe
13 Hohlwelle
14 Hohlwelle
15 Kegelradpaar
16 schräge Welle
17 schräge Welle
18 Kegelradpaar
19 Kegelradpaar
20 Antriebswelle
21 Kegelradpaar
22 schräge Hohlwelle, Welle
23 Kegelradpaar
24 schräge Hohlwelle, Welle

Fortsetzung der Stückliste

25 Untersetzungsgetriebe
26 Untersetzungsgetriebe
27 Zwischenrad
28 Lager
29 Drehrichtung vorderes Kopfteil
30 Drehrichtung Antriebswelle für vorderes Kopfteil
31 Untersetzungsgetriebe
32 Antriebswelle

**Patentansprüche**

1. Getriebekopf für Manipulatoren mit drei hintereinander angeordneten und um zueinander schräge Achsen gelagerten Kopfteilen, deren schräge Achsen mit der Grundachse des Getriebekopfes in Streckstellung nach entgegengesetzten Seiten sich öffnende, spitze Winkel bilden, wobei an der Eingangsseite des hinteren Kopfteiles die Antriebswellen für die Kopfteile und gegebenenfalls für einen im vorderen Kopfteil gelagerten Werkzeugträger konzentrisch zueinander angeordnet und hoch untersetzende Getriebe abtriebsseitig auf den längs der schrägen Achsen sich erstreckenden und über Winkelgetriebe miteinander verbundenen Wellen vorgesehen sind, dadurch **gekennzeichnet** , daß sich die Untersetzung (x) des einen Untersetzungsgetriebes (25) zwischen dem hinteren Kopfteil (1) und dem mittleren Kopfteil (2) von der Untersetzung (x-1) des anderen Untersetzungsgetriebes (26) zwischen dem mittleren Kopfteil (2) und dem vorderen Kopfteil (3) um eine Umdrehung unterscheidet, wobei der die beiden schrägen Wellen (22,24) verbindende Winkeltrieb (23) so angeordnet ist, daß eine Kompensation dieses Untersetzungs-Unterschiedes durch gegenseitige Abwälzung der Winkeltriebräder (23) während einer Umdrehung des mittleren Kopfteiles (2) erfolgt.

2. Getriebekopf nach Anspruch 1, dadurch **gekennzeichnet**, daß gleiche Harmonic-Drive-Differentialgetriebe als Untersetzungsgetriebe (25,26) verwendet, diese aber zur Erreichung der Untersetzungsdifferenz mit zueinander ungleicher Abstützung ihrer Stahlringe (Dynamic Spline (DS) bzw. Circular Spline (CS)) eingebaut werden.

3. Getriebekopf nach Anspruch 1, dadurch **gekennzeichnet**, daß ungleiche Harmonic-Drive-Differentialgetriebe als Untersetzungsgetriebe (25,26) verwendet, diese aber zur Erreichung der Untersetzungsdifferenz mit zueinander gleicher Abstützung ihrer Stahlringe (Dynamic-Spline (DS) bzw. Circurlar-Spline (CS)) eingebaut werden.

4. Getriebekopf nach Anspruch 1 oder einem der folgenden, dadurch **gekennzeichnet**, daß bei Anordnung eines angetriebenen Werkzeugträgers (7) dessen Antriebswellenzug (14,15,16,17,18,19,32) durch die sich längs der schrägen Achsen (5,6) erstreckenden, hohlen Wellen (22,24) geführt ist.

## Claims

1. Gear head for manipulators with three head parts arranged one behind the other and mounted about axes which are inclined with respect to each other, whereof the inclined axes form acute angles with the basic axis of the gear head, which angles open towards opposite sides in the elongated position, at the input side of the rear head part the drive shafts for the head parts and possibly for a tool holder mounted in the front head part being arranged concentrically with respect to each other and gears having a high step-down ratio being provided at the output side on the shafts extending along the inclined axes and connected to each other by way of angular gears, characterised in that the step-down ratio (x) of one reduction gear (25) between the rear head part (1) and the central head part (2) differs from the step-down ratio (x–1) of the other reduction gear (26) between the central head part (2) and the front head part (3) by one revolution, the angular drive (23) connecting the two inclined shafts (22, 24) being arranged so that a compensation of this step-down ratio difference takes place due to a mutual rolling motion of the angular drive wheels (23) during one revolution of the central head part (2).

2. Gear head according to Claim 1, characterised in that identical harmonic drive differential gears are used as the reduction gears (25, 26), but in order to achieve the step-down ratio difference, the latter are installed with dissimilar support of their steel rings [Dynamic Spline (DS) or circular spline (CS)].

3. Gear head according to Claim 1, characterised in that dissimilar harmonic drive differential gears are used as the reduction gears (25, 26), but in order to achieve the step-down ratio difference, the latter are installed with identical support of their steel rings [dynamic spline (DS) or circular spline (CS)].

4. Gear head according to Claim 1 or one of the following Claims, characterised in that in an arrangement of a driven tool holder (7), its drive shaft train (14, 15, 16, 17, 18, 19, 32) is guided through the hollow shafts (22, 24) extending along the inclined axes (5, 6).

## Revendications

1. Tête de transmission pour des manipulateurs comportant trois éléments, qui sont disposés les uns derrière les autres et sont montés de manière à pouvoir tourner autour d'axes inclinés les uns par rapport aux autres et dont les axes inclinés font, avec l'axe de base de la tête de transmission dans sa position déployée, des angles aigus s'ouvrant sur des côtés opposés, et dans laquelle sur le côté entrée de l'élément de tête arrière, les arbres d'entraînement pour les éléments de tête et éventuellement pour un porte-outil tourillonné dans l'élément de tête avant, sont concentriques et dans laquelle des transmissions fournissant une forte démultiplication sont prévues, sur le côté mené, sur les arbres, qui s'étendent le long des axes inclinés et sont reliés entre eux par l'intermédiaire de transmissions angulaires, caractérisée par le fait que la démultiplication (x) d'une transmission démultiplicatrice (25) située entre l'élément de tête arrière (1) et l'élément de tête médian (2) diffère, d'un tour, de la démultiplication (x–1) de l'autre transmission démultiplicatrice (26) située entre l'élément de tête médian (2) et l'élément de tête avant (3), la transmission angulaire (23) reliant les deux arbres inclinés (22, 24) étant disposée de telle sorte que cette différence de démultiplication est compensée par un roulement réciproque des pignons (23) de la transmission angulaire pendant un tour de l'élément de tête médian (2).

2. Tête de transmission suivant la revendication 1, caractérisée par le fait qu'on utilise des transmissions différentielles Harmonic-Drive identiques comme transmissions démultiplicatrices (25, 26), mais que, pour l'obtention de la différence de démultiplication, on agence ces transmissions avec des montages différents de leurs bagues en acier (Dynamic Spline (DS) ou Circular Spline (CS)).

3. Tête de transmission suivant la revendication 1, caractérisée par le fait qu'on utilise des transmissions différentielles Harmonic Drive différentes comme transmissions démultiplicatrices (25, 26), mais que, pour l'obtention de la différence de démultiplication, on agence ces transmissions avec un montage identique de leurs bagues en acier (Dynamic Spline (DS) ou Circular Spline (CS)).

4. Tête de transmission suivant la revendication 1 ou l'une des suivantes, caractérisé par le fait que, dans le cas du montage d'un porte-outil (7) entraîné, le train d'arbres d'entraînement (14, 15, 16, 17, 18, 19, 32) de ce porte-outil s'étend à travers les arbres creux (22, 24), qui s'étendent le long des axes obliques (5, 6).

FIG. 1

EP 0 229 941 B1

FIG. 2

z.B. i = 101:1

z.B. i = 100:1

FIG. 3

z.B. i = 101:1

z.B. i = 100:1

FIG.4

z.B. i= 101:1

z.B. i= 100:1

FIG.5

z.B. i= 102:1

z.B. i= 101:1

FIG. 6

z.B. i = 101:1

z.B. i = 100:1

FIG. 7

z.B. i = 102:1

z.B. i = 101:1

FIG. 8